Europäisches Patentamt

European Patent Office

Office européen des brevets

(19)

(11) Veröffentlichungsnummer : **0 258 765 B1**

(12) ## EUROPÄISCHE PATENTSCHRIFT

(45) Veröffentlichungstag der Patentschrift :
05.06.91 Patentblatt 91/23

(51) Int. Cl.⁵ : **A01K 1/015, E04F 15/06**

(21) Anmeldenummer : **87112191.9**

(22) Anmeldetag : **22.08.87**

(54) **Spaltbodenrost für einstreulose Aufstallung von Tieren.**

(30) Priorität : **05.09.86 DE 3630280**

(43) Veröffentlichungstag der Anmeldung :
**09.03.88 Patentblatt 88/10**

(45) Bekanntmachung des Hinweises auf die
Patenterteilung :
**05.06.91 Patentblatt 91/23**

(84) Benannte Vertragsstaaten :
**AT BE CH DE FR LI NL**

(56) Entgegenhaltungen :
**US-A- 4 258 662**

(56) Entgegenhaltungen :
**LANDTECHNIK, Band 43, Heft 9, 1988 Seiten
388, 389, Lehrte Hannover- DE; T. Homann et
al.: "Flatdeck bleibt aktuell.", Seite 389, mittlere Spalte**

(73) Patentinhaber : **Bockhacker, Bernd
Industriestrasse 12
W-4401 Saerbeck (DE)**

(72) Erfinder : **Bockhacker, Bernd
Industriestrasse 12
W-4401 Saerbeck (DE)**

(74) Vertreter : **Habbel, Hans-Georg, Dipl.-Ing.
Postfach 3429 Am Kanonengraben 11
W-4400 Münster (DE)**

## Beschreibung

Die Erfindung bezieht sich auf einen Spaltbodenrost für die einstreulose Aufstallung von Tieren gemäß dem Oberbegriff des Anspruches 1.

Die einstreulose Aufstallung von Tieren ist seit langer Zeit bekannt und als Boden werden Betonelemente, Metallelemente aus Aluminium, verzinktem Stahl oder Edelstahl eingesetzt. Obgleich die einstreulose Aufstallung viele Vorteile aufweist, bringt sie aber auch Probleme hinsichtlich der Korrosionsfestigkeit der Bodenelemente mit sich.

Man hat bereits vorgeschlagen, die aus Metall bestehenden Bodenelemente zu emaillieren, um so eine hohe Säurebeständigkeit zu erreichen. Dieser Vorschlag hatte aber den Nachteil, daß die Oberfläche der Trittseite der Rostelemente sehr glatt wird, so daß die Tiere leicht ausrutschen, was insbesondere bei Schweinen dazu führt, daß sich die Tiere nicht mehr auf den Rostelementen bewegen, sondern daß die Tiere einfach liegenbleiben. Hierdurch wird die Futteraufnahme eingeschränkt und damit die angestrebte wirtschaftliche Tierhaltung in Frage gestellt.

Die glatten Bodenbleche oder Roststäbe, unabhängig ob sie emailliert oder aus Edelstahl bestehen, haben weiterhin den Nachteil, daß die Klauen der Tiere nicht in einer naturgemäßen Weise abgeschliffen werden, so daß es hier zu Fehlentwicklungen kommt, die ebenfalls das Wohlbefinden der Schweine beeinträchtigen.

Verzinkte Rostelemente haben den Nachteil, daß sie nicht bakterienfrei saubergehalten werden können, so daß die Hygiene im Stall nicht gewährleistet ist. Das gleiche tritt auch bei Aluminiumbodenelementen ein und selbst Edelstahl hat sich als unhygienisch erwiesen, so daß die Landwirte und Tierzüchter selbst von diesen hochwertigen Materialien Abstand genommen haben.

Aus der US-A-42 58 662 ist ein Loch- bzw. Spaltboden bekannt, der aus Sperrholzstäben besteht, die mit einer Kunststoffummantelung aus glasfaserverstärktem Kunstharz ausgerüstet sind. Auf diese aus glasfaserverstärktem Kunstharz bestehende Ummantelung kann eine Kunststoffschicht aufgebracht werden, die granulatförmige Stoffe, wie Split oder Sand enthält. Die granulatförmigen Stoffe sind relativ groß und können sich bei Belastung in die darunterliegende Kunststoffschicht einpressen. Hier führen sie zu Verletzungen und auch Zerstörungen dieser Kunststoffschicht, so daß dann der gewünschte säuredichte Abschluß des aus Sperrholz bestehenden Kerns des Lochbodens aufgehoben ist.

Die mit einem Kunststoffüberzug versehenen, aus Sperrholz bestehenden Rostelemente können dem aggressiven Verhalten von Tieren, insbesondere von Schweinen, nicht standhalten. Die Kunststoffschicht wird angeknabbert und kann abgezogen werden, so daß einerseits die Festigkeit des Bodens beeinträchtigt wird, zum andern die Tiere krank werden.

Schließlich ist die Rauhigkeit dieses Rostelementes so groß, daß sich die Tiere nicht auf diesen Boden legen, da er zu Druckstellen führt und auch der gewünschte schmiergelartige Abrieb der Klauen wird nicht erreicht.

Der Erfindung liegt die Aufgabe zugrunde, den gattungsbildenden Spaltbodenrost dahingehend zu verbessern, daß die Standsicherheit der Tiere auf den Böden und gleichzeitig die Klauenabnutzung den natürlichen Verhältnissen entsprechend verbessert wird und die Böden trotz hoher Korrosionsfestigkeit tierfreundlich sind.

Diese der Erfindung zugrundeliegende Aufgabe wird durch die Lehre des Anspruches 1 gelöst.

Ein Verfahren zur Erzielung eines Spaltbodenrostes ist in dem unabhängigen Anspruch 2 erläutert.

Die Erfindung geht von der Überlegung aus, daß es möglich sein muß, aus Stahlblech gefertigte Bodenelemente zu emaillieren, ohne daß trotz starker Benutzung ein Ablösen der Emaille eintreten kann. Vorzugsweise werden hierfür besondere Stahlblechsorten eingesetzt.

Die so hergestellten Bodenelemente sind damit allseits säuregeschützt und hygienisch einwandfrei, da in der glasartigen Emailleschicht ein Festsetzen von Bakterien nicht möglich ist, die Bakterien können vielmehr ohne weiteres durch Wasser entfernt werden. Wird in einem zweiten Arbeitsgang die Oberseite der Bodenelemente, d.h. also die eigentliche Trittseite mit einer zweiten Silicat-Emailleschicht versehen, ist es möglich, trotz Festigkeit und Isolierung des tragenden Metallelementes durch die erste Emailleschicht eine Keramikschicht aufzubringen, die rutschfest ist, wobei hier der Silicat-Anteil in einer Größenordnung von 0,01 bis 0,10 mm eingesetzt wird. Die hierdurch erzielte Rauhigkeit gibt Bakterien keine Möglichkeit der Ansiedlung, da die geschaffenen Poren einerseits nach unten zum Metall durch die erste Emailleschicht abgeschlossen sind, zum andern die Poren so fein sind, daß hier ohne weiteres ein Ausspülen von Verunreinigungen durch Wasser möglich ist. Andererseits schafft die rauhe Oberfläche ein tierfreundliches Element. Die Tiere finden eine Trittfestigkeit, gleichzeitig eine entsprechende naturähnliche Beanspruchung der Klauen und die "Kälte" des Emaills wird durch die Rauhigkeit der Keramikschicht vermieden, so daß eine liegefreundliche Atmosphäre geschaffen wird.

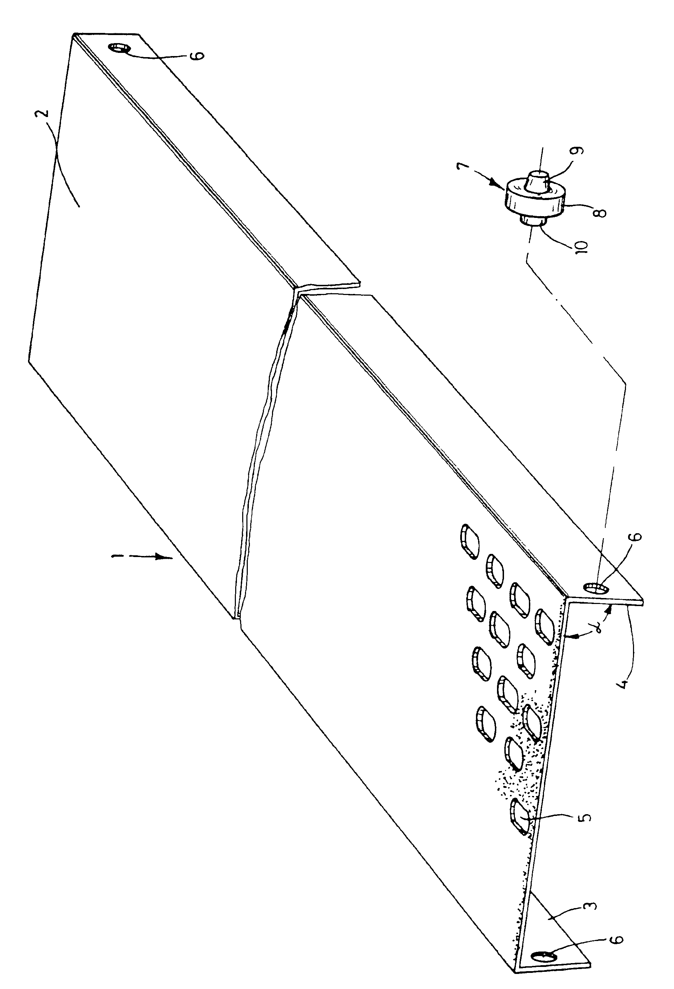

Ein Ausführungsbeispiel der Erfindung wird nachfolgend anhand der Zeichnung erläutert.

In der Zeichnung ist mit 1 ein Bodenblech für einen Lochboden bezeichnet, das eine Trittseite 2 und zwei sich an den Randkanten der Trittseite nach unten hin anschließende Befestigungsflansche 3 und 4 aufweist. Die Befestigungsflansche schließen dabei mit ihrer Innenseite und der Unterseite der Trittseite einen Winkel α kleiner als 90° ein. Das gesamte Bodenblech ist emailliert, zusätzlich ist aber die Oberseite der Trittseite mit einer zweiten Silicat-Emailleschicht versehen, die rauh ist, da die Silicat-Anteile in dieser Schicht in einer Größenordnung von 0,01 bis 0,10 mm vorliegen. Nach dem Emaillieren des Bodenbleches wird in einem zweiten Emailliervorgang diese zweite Silicat-Emailleschicht aufgebracht, die sich damit fest mit der ersten Emailleschicht verbindet, ohne daß ein Durchtritt des Silicat-Anteiles möglich ist, der also nicht mit dem aus Stahlblech bestehenden Grundelement des Bodenbleches in Berührung kommen kann. Die Trittseite 2 ist in an sich bekannter Weise mit Lochungen 5 versehen.

In den Befestigungsflanschen 3 und 4 sind Öffnungen 6 angeordnet und in der Zeichnung ist ein Distanzstück 7 dargestellt, das aus einem mittleren Walzenkörper 8 besteht, an den sich beiderseits Befestigungsnocken 9 und 10 anschließen. Der Durchmesser der Öffnungen 6 ist in Abstimmung mit dem Außendurchmesser der Befestigungsnocken 9 und 10 so gewählt, daß hier ein sicheres Festsetzen des Distanzstückes 7 in den Befestigungsflanschen möglich ist. Hierdurch ist ein Anschluß der einzelnen Bodenbleche im Abstand der Befestigungsflansche voneinander möglich.

Die Lochungen 5 sind gratlos ausgebildet, so daß hier keine Beschädigung der Emailleschicht eintreten kann.

## Ansprüche

1. Spaltbodenrost für Tieraufstallungen, bestehend aus einem langgestreckten, aus email liertem Metall gefertigten Profil, dadurch gekennzeichnet, daß die Trittseite (2) an ihrer Oberseite mit einer zusätzlichen, rauhen und somit rutschfesten säurebeständigen Silicat-Emailleschicht versehen ist, deren Silicat-Anteil eine Korngröße von 0,01 bis 0,10 mm aufweist.

2. Verfahren zur Herstellung eines Spaltbodenrostes für Tieraufstallungen, bei welchem nach Durchführen der erforderlichen Bearbeitung das Metallprofil in ein Bad säurefester Emaille eingetaucht und anschließend die Emaille eingebrannt wird, dadurch gekennzeichnet, daß auf die erste, eingebrannte Emailleschicht auf der Oberseite der Trittseite des Rostelementes eine weitere säurebeständige Silicat-Emailleschicht aufgebracht wird, deren Silicat-Anteil eine Korngröße zwischen 0,01 bis 0,10 mm aufweist und anschließend diese aufgebrachte Silicat-Emailleschicht in einem zweiten Einbrennvorgang eingebrannt wird.

## Claims

1. An apertured floor grating for animal housings, comprising an elongate number made of enamelled metal, characterized in that the tread side (2) is provided on the top with an additional rough and thus non-slip, acid-proof silicate/enamel coat, the silicate portion of which has a grain size of from 0.01 to 0.10 mm.

2. A method of manufacturing an apertured floor grating for animal housings, in which, after the necessary working has been carried out, the metal member is immersed in a bath of acid-proof enamel, the enamel being subsequently burned in, characterized in that a further acid-proof silicate/enamel coat is applied to the first, burnt-in enamel coat on the top of the tread side of the grating number, the silicate portion of which silicate/enamel coat has a grain size of between 0.01 and 0.10 mm, this applied silicate/enamel coat subsequently being burned in in a second burning-in process.

## Revendications

1. Caillebotis pour logements d'animaux, composé d'un profilé allongé réalisé en métal émaillé, caractérisé en ce que la face de marche (2) est munie sur sa face supérieure d'une couche supplémentaire, rugueuse et ainsi antidérapante, résistant aux acides, d'émail au silicate, dont la portion de silicate présente une grosseur de grains de 0,01 à 0,10 mm.

2. Procédé de fabrication d'un caillebotis pour logements d'animaux, dans lequel après exécution du traitement nécessaire le profilé métallique est plongé dans un bain d'émail résistant aux acides et ensuite l'émail est cuit, caractérisé en ce que sur la première couche d'émail cuite de la face supérieure de la face de marche de l'élément en caillebotis une autre couche résistant aux acides d'émail au silicate est appliquée, dont la portion de silicate présente une grosseur de grains de 0,01 à 0,10 mm et ensuite cette couche d'émail au silicate appliquée est cuite dans une seconde opération de cuisson.